Europäisches Patentamt

European Patent Office

Office européen des brevets

(11) Publication number: **0 131 710**
**B1**

(12) **EUROPEAN PATENT SPECIFICATION**

(45) Date of publication of patent specification: **22.04.87**

(51) Int. Cl.⁴: **G 01 B 11/30, G 01 N 21/57**

(21) Application number: **84105532.0**

(22) Date of filing: **15.05.84**

(54) **Method of determining surface roughness using a visible and infrared laser source.**

(30) Priority: **23.05.83 US 497359**

(43) Date of publication of application:
**23.01.85 Bulletin 85/04**

(45) Publication of the grant of the patent:
**22.04.87 Bulletin 87/17**

(84) Designated Contracting States:
**DE FR GB IT NL SE**

(56) References cited:
**DE-B-2 402 127**
**US-A-3 388 259**
**US-A-3 971 956**
**US-A-4 053 237**

(73) Proprietor: **ALUMINUM COMPANY OF AMERICA**
**1501 Alcoa Building Mellon Square**
**Pittsburgh, PA 15219 (US)**

(72) Inventor: **Freilino, Joseph Anthony**
**252 Dewey Drive**
**New Kensington Pennsylvania (US)**

(74) Representative: **Baillie, Iain Cameron et al**
**c/o Ladas & Parry Isartorplatz 5**
**D-8000 München 2 (DE)**

Courier Press, Leamington Spa, England.

## Description

Background of the invention

The present invention relates to a method for measuring surface roughness. More particularly, the present invention relates to a method for determining the roughness of surfaces having a unidirectional lay pattern using a visible and infrared laser and measuring the specularly reflected infrared energy as an indicator of the degree of surface roughness.

Historically, the roughness of machined surfaces, such as the rolling surface of a work roll used in mills to reduce the thickness of metal sheets, has been measured by moving a stylus across a portion of the roll's surface, as shown in U.S. Patent 3,377,828 to Harmon. The use of a stylus is not desirable for some applications since it may mark the roll's surface where the stylus makes physical contact with the roll.

In order to provide a more adequate examination of working surfaces, light energy has been employed, such as shown in U.S. Patent 3,971,956 to Jakeman et al. Jakeman et al discloses a method of measuring surface roughness using a source of electromagnetic radiation, such as a laser beam. The laser beam is directed perpendicularly onto the surface to be measured. Relative movement between the surface and the beam is applied. The intensity of the radiation scattered at one or more angles from the surface is detected and processed by electrical circuitry to produce the values of average intensity and the average of the square of intensity. Jakeman et al requires such processing to determine characteristics of the surface irregularities, such as the height of the surface irregularities and the average statistical wavelength. Jakeman et al appears to be measuring the intensity of the diffuse reflectance of the beam from the surface. Measurement of diffuse reflectance in room lighting would be difficult because the reflected energy level would be low when compared to the energy level of the ambient light, thereby requiring the use of expensive and sophisticated detectors. Such detectors would likely be used, in any case, in practicing the teaching of Jakeman et al, considering the complex nature of the scattering phenomenon being observed in Jakeman et al.

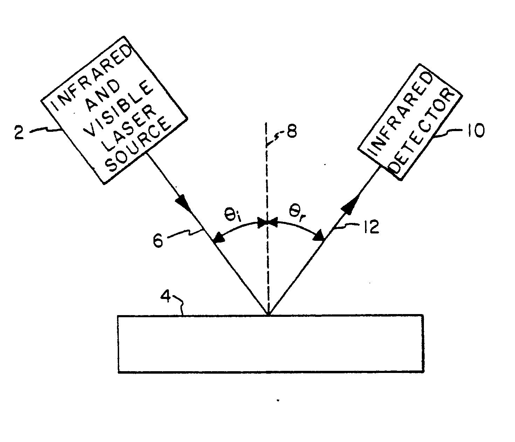

Another laser device for measuring surface roughness is shown in U.S. Patent 3,388,259 to Flower. The disclosure of this patent is directed to the concept that the degree of surface roughness is directly related to the rate of change of the pattern of reflected energy from the surface over a given change in angle of incidence, even though the pattern of reflected energy changes randomly. An appropriate apparatus for demonstrating this phenomenon is shown in Figure 2 of the drawings for this patent. Flower appears to be using the interference phenomenon of waveform scattering in observing the rate of change in the reflected energy pattern. Measurement of surface roughness in Flower is complex, requiring observation of the reflected energy pattern for at least two different angles of incidence and noting the rate of change of the reflected energy patterns. Additionally, Flower does not mention any particular roughness range over which the system disclosed therein would apply.

From a general laboratory point of view, miscellaneous optical techniques for examining surfaces are discussed in a paper entitled "The Surface Inspection of Metal Sheet and Strip by Optical Methods" By Patricia M. Reynolds, as published in Volume 11 of *Metallurigical Reviews*, pages 89—96 (1966). In this paper, for example, a technique for measuring optical smoothness is disclosed whereby the measure of the ratio of the specular reflectivity of a flat sample to its total reflectivity is used in defining a surface's optical smoothness. In another example, a gloss-head is described therein in which a collimated beam of light is shown at a 45° angle to the surface and the specular reflectivities are measured for surface discrimination. A further example in this paper relates to the measurement of the change in the intensity of the specular reflection from planar surfaces with the incident angle of a parallel light beam for correlation with surface brightness.

Also, *inter alia*, the Reynolds paper presents an example of an inspection device and method for flaw detection in a tube. In such method and device, a source of light is reflected from the tube and the reflected light is received by a plurality of photocells for pattern recognition of the flaw as the tube is rotated about its axis and translated longitudinally so that such inspection device views a helical path on the tube's surface. As can be appreciated, flaw detection is not the same as the detection of surface roughness or smoothness of a working surface, such as the surface of work rolls used in a rolling mill.

As can be seen from these preceding examples and other examples in the Reynolds paper, the various optical methods and apparatus presented therein do not disclose or suggest a method for providing an absolute numerical measurement of the roughness of a surface in microinches 1 microinch=0.0254 µm for example, over a given range of roughness profile. Rather, this paper teaches techniques for flaw detection, surface flatness or relative measurements relating to surface quality, such as surface brightness or surface discrimination.

U.S. Patent 4,053,237 to Casey discloses a method for testing the surface texture of a chill roll to determine the expected surface texture of plastic film that may be cast thereagainst. Casey teaches that a consistent correlation exists between the surface texture of a steel chill roll and the plastic film surface cast against the roll. A glossmeter is first used to obtain correlative spectral gloss data from the surfaces of representative chill rolls and from the respective product plastic films issued therefrom. The glossmeter is then used to measure the surface gloss quality of a chill roll in question, and the response measure of the glossmeter is compared to the previously acquired spectral gloss data to ascertain the surface texture of plastic film that may be cast against the roll. Such method does not suggest a method for determining the height of surface irregularities over a given roughness range, such as for a working surface, for example.

A relationship between surface roughness and specular reflectance of light from a surface has been known to exist. The theoretical aspects of such relationship are discussed in the *Physics of Thin Films* (Advances in Research and Development), Volume 4, Section IV, "Surface Roughness", pages 12—17, by H. E. Bennett and Jean M. Bennett, Academic Press, New York (1967). This relationship is based upon the concept that the observed specular reflectance is not substantially affected by the shape of the surface irregularities, but rather, by the height of the surface irregularities when the height (h) of the irregularities is small compared to the wavelength ($\lambda$) of the light incident to the surface being examined.

It is known that substantially all light reflected from a smooth surface would be specularly reflected at an angle equal to the incident angle. The amount of light specularly reflected is reduced as surface roughness increases. A surface is characterized as being "rough" or "smooth" by determining the ratio of the incident light wavelength ($\lambda$) to the height of the surface irregularities (h). For a smooth surface, the ratio of $h/\lambda$ would be very much less than one ($h/\lambda \ll 1$). Accordingly, whether a surface is "rough" or "smooth" would be dependent upon the wavelength of the incident light used in relation to the height of the surface irregularities. If a surface is smooth, the measurement of the specularly reflected light energy can be used for determining surface roughness.

Methods using specularly reflected visible light energy for ascertaining the height of surface irregularities for smooth surfaces, where the ratio of $h/\lambda$ is significantly less than one, are known. Such a method, for example, has included shining a laser source of visible light energy having a wavelength of approximately 6328Å (0.633 µm) at the surface to be examined, such as the surface of a work roll for use in a rolling mill, and measuring the specularly reflected light energy from the surface.

Techniques using specularly reflected visible light energy from a 6328Å wavelength visible laser source have been limited in application, since surface irregularities over about 0.13 µm (five microinches) cannot be accurately measured. Theoretically, using an infrared laser source having a wavelength of from about 3 to about 5 µm, for example would allow for surface inspection of irregularities up to about 0.51 µm (20 microinches) in height through measurement of the specularly reflected infrared energy from the examined surface. Such infrared laser techniques have not been considered practical for a plant environment since the infrared energy beam is not visible. Further, use of an infrared laser beam has heretofore not been advantageous because of the difficulty and time required in aligning the invisible beam on the surface to be examined and the potential danger in unknowingly exposing a person, particularly the person's eyes, to an invisible high energy infrared laser beam.

What is needed, therefore, is a method of accurately determining surface roughness for surface irregularities both below and above 0.13 µm (five microinches) in height in industrial or manufacturing environments. Such a method should also promote the efficient, reliable and safe measurement of surface roughness using specularly reflected light energy for surface examination.

Summary of the invention

The present invention relates to a method of using laser light energy to examine a working surface having a unidirectional or parallel lay pattern in a roughness profile range of about zero to about 0.51 µm (20 microinches). A substantially symmetric and substantially concentric single, integral beam of infrared and visible laser light energy is directed toward the surface to be examined at a predetermined angle of incidence to the "surface normal" explained hereinafter. The visible light of the beam is used to locate the beam on the surface to be examined. A detector of infrared energy is located, using the integral visible light of the beam, at a predetermined angle to the surface normal to receive and detect only the specularly reflected infrared energy from the surface being examined. The intensity of the specularly reflected infrared energy is measured, the intensity indicating the degree of surface roughness.

An objective of the present invention is to provide an accurate and efficient method for determining the height of surface irregularities to about 0.51 µm (20 microinches), the surface having a unidirectional lay pattern.

A further objective of the present invention is to enhance the safety of using infrared laser light energy for surface roughness measurements for industrial or manufacturing applications.

The above-mentioned and other objectives and advantages of the present invention will be more fully appreciated and understood by reference to the following detailed description and the drawing appended hereto.

Brief description of the drawing

The sole figure is a schematic view showing the method of the present invention.

Description of the preferred embodiments

Referring to the figure, a preferred method of the present invention for determining surface roughness in a roughness profile range of approximately 0 to 0.51 µm (20 microinches) for surfaces having a unidirectional lay pattern is illustrated therein. An example of a surface to which the method of the present invention applies is a working surface of a work roll for use in a rolling mill. More particularly, the method of the present invention is applicable to determining the surface roughness of a steel work roll during roll grinding, though the method is not limited thereto.

A laser source 2 of visible and infrared light-energy is employed in the method for measuring the roughness of a surface 4. The visible and infrared laser emits a beam 6 which is substantially symmetric and substantially concentric about the optic axis over the optical path length from laser source 2 to surface 4. Preferably, beam 6 is also substantially nondivergent over the above-mentioned optical path length from laser source 2 to surface 4. Preferably, a helium-neon laser constructed to emit visible light energy of about 0.633 μm and infrared light energy of about 3.39 μm is suitable for the purposes of the present invention.

Beam 6 of the infrared and visible light energy is directed to surface 4 to be examined, the beam being directed at a predetermined angle of incidence $\theta i$ to a surface normal 8. Surface normal 8 is defined as an imaginary line perpendicular to surface 4 being examined which intersects with the beam 6 at surface 4. It is desirable that such angle $\theta i$ be in the range of about 30° to about 80° with $\theta i$ at approximately 45° being most desirable for ease in maintaining alignment of laser beam 6 with surface 4 during measurement.

The visible light of the integral laser beam 6 is utilized to locate beam 6 on surface 4. Such visible light facilitates manual alignment of the beam 6 with the target surface 4 to be examined. Without such visible light, use of infrared laser light energy in a production environment would be prohibitive. The location and alignment using an infrared beam alone on the surface to be examined could not easily be performed under normal plant lighting conditions without complex alignment procedures and expensive equipment, such as an automatic servo system designed for the particular measuring application, for example. Accordingly, the initial alignment time by using such visible light may be significantly reduced to a few minutes or less for most measurements.

The visible laser light in the integral laser beam 6 in the method of the present invention also provides increased safety over techniques which would employ only infrared laser light energy. Such visible light in the integral beam 6 makes beam 6 visible under normal room lighting, thereby aiding in the prevention of safety hazards related to unknowingly exposing a person, especially the person's eyes, to an invisible high energy infrared laser beam.

A detector of infrared energy 10 is located at a predetermined angle $\theta r$ to surface normal 8 to detect only the specularly reflected infrared energy from surface 4, although the specularly reflected beam 12 is comprised of visible and infrared light energy. The visible light in specularly reflected beam 12 adds visibility to beam 12 to facilitate alignment and placement of detector 10, as well as to provide for increased safety as previously discussed. Specularly reflected beam 12 is substantially symmetric and substantially concentric about the optic axis over the optical path length from surface 4 to detector 10. Preferably, beam 12 is also substantially nondivergent over the above-mentioned optical path length from surface 4 to detector 10. The measurement of angle $\theta r$ should be substantially equal to the measurement of angle $\theta i$, since only specularly reflected energy is utilized for measurement of surface roughness in the method of the present invention.

The intensity of the detected specularly reflected infrared energy is measured, the intensity indicating the degree of surface roughness or, in other words, the height of the surface irregularities. The method of the present invention uses only the single optical parameter of the specularly reflected infrared energy that relates only to the height of the roughness peaks of the surface to provide an indication of surface roughness. The shape of the individual surface irregularities, or roughness peaks, does not affect the measurement, provided the ratio of the height (h) of the surface irregularities to the infrared laser light energy wavelength (λ) employed is very much less than unity ($h/\lambda \ll 1$). Accordingly, in practicing the method of the present invention, for a roughness profile range of approximately 0 to 0.51 μm (20 microinches), the wavelength of the infrared laser light energy would desirably lie in a range of about 3 to about 10 μm. An infrared laser light energy wavelength of about 3.39 μm is preferred within such range.

While the present invention has been described in terms of preferred embodiments, it will be apparent to those skilled in the art that certain modifications and adaptations can be made to the method based upon the teachings presented herein.

**Claims**

1. A method of determining the roughness of surfaces in a roughness profile range of about zero to about 0.51 μm (20 microinches), the surfaces having a unidirectional lay pattern, comprising the steps of:

providing a laser source of infrared and visible light energy;

directing a substantially symmetric and substantially concentric single, integral beam of the infrared and visible light energy to the surface to be examined, the beam being directed at a predetermined angle to the surface normal;

utilizing the visible light of the beam to locate the beam on the surface;

locating, using the integral visible light of the beam, a detector of infrared energy at a predetermined angle to the surface normal to receive and detect only specularly reflected infrared energy from the surface; and

measuring the intensity of the specularly reflected infrared energy, the intensity indicating the degree of roughness of the surface.

2. A method according to claim 1, wherein the wavelength of the infrared energy lies in a range of 3 to 10 μm.

3. A method according to claim 2, in which the wavelength of the infrared energy is about 3.39 μm.

4. A method according to any one of the preceding claims, in which only the single optical parameter of the specularly reflected infrared energy that relates only to the height of the roughness peaks of the surface is used to provide the indication of surface roughness.

5. A method according to any one of the preceding claims, in which the surface over which a determination of surface roughness is being made is a working surface of a work roll for use in a rolling mill.

6. A method according to claim 5, the work roll is a steel work roll for use in a mill for rolling aluminum.

## Patentansprüche

1. Verfahren zum Bestimmen der Rauhheit von Flächen mit einem Rauhtiefenbereich von etwa Null bis etwa 0,51 μm, wobei die Flächen ein Muster von in einer einzigen Richtung verlaufenden Bearbeitungsspuren besitzen, mit folgenden Schritten:

Es wird eine Laserquelle von Energie im Infrarotbereich und im Bereich des sichtbaren Lichts verwendet,

Energie im Infrarotbereich und im Bereich des sichtbaren Lichts wird in Form eines einzigen, ungeteilten, symmetrischen und im wesentlichen konzentrischen Strahlenbündels unter einem vorherbestimmten Winkel zu der Normalen auf die zu untersuchende Fläche gegen diese Fläche geführt,

mit Hilfe des sichtbaren Lichtes des Strahls wird die Lage des Strahlenbündels auf der Fläche bestimmt,

mit Hilfe des ungeteilten sichtbaren Lichtes des Strahlenbündels wird unter einem vorherbestimmten Winkel zu der Normalen auf die Fläche ein Detektor angeordnet, der nur Infrarotenergie empfängt und erfaßt, die von der Fläche zurückgespiegelt worden ist, und

die Intensität der zurückgespiegelten Infrarotenergie wird als Maß der Rauhheit der Fläche gemessen.

2. Verfahren nach Anspruch 1, dadurch gekennzeichnet, daß die Wellenlänge der Infrarotenergie im Bereich von 3 bis 10 μm liegt.

3. Verfahren nach Anspruch 2, dadurch gekennzeichnet, daß die Wellenlänge der Infrarotenergie etwa 3,39 μm beträgt.

4. Verfahren nach einem der vorhergehenden Ansprüche, dadurch gekennzeichnet, daß als Maß der Oberflächenrauhheit nur jener einzige optische Parameter der zurückgespiegelten verwendet wird, der nur mit der Höhe der Rauhheitsspitzen auf der Fläche in Beziehung steht.

5. Verfahren nach einem der vorhergehenden Ansprüche, dadurch gekennzeichnet, daß die Fläche, deren Rauhheit bestimmt wird, eine Arbeitsfläche einer Arbeitswalze für die Verwendung in einem Walzwerk ist.

6. Verfahren nach Anspruch 5, dadurch gekennzeichnet, daß die Arbeitswalze eine Arbeitswalze aus Stahl für die Verwendung in einem Aluminiumwalzwerk ist.

## Revendications

1. Procédé de détermination de la rugosité de surfaces dans une gamme de profils de rugosité allant d'environ zéro à environ 0,51 μm (20 micropouces), les surfaces ayant une configuration de couche unidirectionnelle, comprenant les étapes suivantes:

prévoir une source laser d'énergie lumineuse infrarouge et visible;

diriger un faisceau confondu unique sensiblement symétrique et sensiblement concentrique d'énergie lumineuse infrarouge et visible vers la surface à examiner, le faisceau étant dirigé selon un angle prédéterminé par rapport à la normale à la surface;

utiliser la lumière visible du faisceau pour localiser le faisceau sur la surface;

localiser, en utilisant la lumière visible confondue du faisceau, un détecteur d'énergie infrarouge selon un angle prédéterminé par rapport à la normale à la surface pour recevoir et détecter seulement l'énergie infrarouge réfléchie de façon spéculaire à partir de la surface; et

mesurer l'intensité de l'énergie infrarouge réfléchie de façon spéculaire, cette intensité indiquant le degré de rugosité de la surface.

2. Procédé selon la revendication 1, dans lequel le longueur d'onde de l'énergie infrarouge se trouve dans une gamme de 3 à 10 μm.

3. Procédé selon la revendication 2, dans lequel la longueur d'onde de l'énergie infrarouge est d'environ 3,39 μm.

4. Procédé selon l'une quelconque des revendications précédentes dans lequel le paramètre optique unique de l'énergie infrarouge réfléchie de façon spéculaire qui se rapporte seulement à la hauteur des crêtes de rugosité de la surface est utilisé pour fournir une indication de la rugosité de la surface.

5. Procédé selon l'une quelconque des revendications précédentes, dans lequel la surface sur laquelle une détermination de la rugosité de surface est effectuée est la surface de travail d'un rouleau de laminage destiné à être utilisé dans un laminoir.

6. Procédé selon la revendication 5, dans lequel le rouleau de laminage est un rouleau de laminage en acier destiné à être utilisé dans un laminoir pour de l'aluminium.